# EUROPEAN PATENT APPLICATION

(11) **EP 4 729 666 A1**
(43) Date of publication of application: **22.04.2026**
(21) Application number: 24917886.4
(22) Date of filing: 28.03.2024
(51) Int. Cl.: C25D 11/34, C25D 9/00

(54) **METHOD FOR CHROMIUM-FREE PASSIVATION OF LITHIUM BATTERY COPPER FOIL**

(30) Priority: 16.01.2024 CN 202410056957
(71) Applicant: Jiujiang Defu Technology Co., Ltd, Jiujiang, Jiangxi 332000 (CN)
(72) Inventor: DONG, Chaolong, Jiujiang, Jiangxi 332000 (CN); CHU, Changshun, Jiujiang, Jiangxi 332000 (CN); YANG, Leixin, Jiujiang, Jiangxi 332000 (CN); CAI, Yujie, Jiujiang, Jiangxi 332000 (CN); SHEN, Xiong, Jiujiang, Jiangxi 332000 (CN); WU, Ying, Jiujiang, Jiangxi 332000 (CN)
(74) Representative: Canzler & Bergmeier Patentanwälte Partnerschaft mbB
(86) International application number: PCT/CN2024/084580
(87) International publication number: WO 2025/152269

(57) **Abstract**

A method for chromium-free passivation of lithium-ion battery copper foil, including: peeling a lithium-ion battery copper foil from a cathode roller, and transferring the copper foil through a transition roller into a passivation tank; adding a chromium-free passivator to the passivation tank; immersing the copper foil in the passivator within the passivation tank while applying a cathodic passivation current; conveying the copper foil through a liquid-squeezing roller and drying the copper foil by passing it through an air-drying device; and drying the copper foil in an oven, then winding it onto a take-up roller to form a finished lithium-ion battery copper foil; inspecting and testing the finished foil and storing qualified products. This method improves the density and rigidity of the passivation film, thereby realizing the durability and stability of the copper foil during long-term storage.

## Description

### REFERENCE TO RELATED APPLICATIONS

This is an application claiming the benefit of priority to a Chinese Patent Application No. 202410056957.1, filed on January 16, 2024, entitled "A Method for Chromium-Free Passivation of Lithium-Ion Battery Copper Foil".

### FIELD OF TECHNOLOGY

The present disclosure relates to the technical field of copper foil, and particularly to a method for chromium-free passivation of lithium-ion battery copper foil.

### BACKGROUND

The pursuit of higher energy density, superior rate capability, and enhanced safety remains a primary focus in the development of lithium-ion batteries. As the anode current collector of a lithium-ion battery, copper foil serves to support the anode active material and distribute the electrons uniformly throughout the anode layer. Therefore, the desired lithium-ion battery copper foil not only has to possess high mechanical strength and excellent electrical conductivity, but also to exhibit strong oxidation resistance.

During the production of electrolytic copper foil, surface passivation treatment is an essential step to impart oxidation resistance to the foil. Properly passivated copper foil not only maintains its original surface characteristics but also exhibits superior anti-oxidation performance, which facilitates subsequent processing during battery manufacturing.

Currently, the most widely used passivation process for lithium-ion battery copper foil involves chromium-containing systems. After passivation, a dense chromium oxide protective film forms on the surface of the copper foil, isolating it from air and preventing oxidation. However, this process introduces chromium, which is not only present on the copper foil surface but is also introduced in multiple stages of production. Organizations such as the World Health Organization have classified hexavalent chromium as a carcinogen. Due to concerns regarding human health and environmental protection, the use of chromium is strictly regulated in many countries. Accordingly, there is an urgent need for a chromium-free passivation method for lithium-ion battery copper foil, which can ensure that the treated copper foil exhibits oxidation and corrosion resistance comparable to those of copper foil processed by conventional chromium-based passivation methods.

There are various existing chromium-free passivation processes for copper materials, typically utilizing either inorganic or organic passivators. Inorganic passivators, such as molybdates and tungstates, form passivation films through coordination with copper. Organic passivators form passivation films via coordination between organic functional groups (e.g., heterocycles) in the solution and copper atoms. However, these passivation techniques are primarily designed for individual components such as pipes, and there are few suitable for multi-layer wound copper foil. Furthermore, existing chromium-free passivation processes often suffer from issues such as local discoloration, short effective oxidation resistance lifetime, and unpleasant odor of the passivated copper foil surface.

To address these limitations, the present disclosure provides a passivator, enabling the copper foil to achieve excellent oxidation resistance after passivation. During the passivation process, a dense passivation film is formed on the copper surface, effectively enhancing the oxidation resistance of the copper foil. In addition, the present disclosure also provides a comprehensive testing method for evaluating the oxidation and corrosion resistance performance of lithium-ion battery copper foil after chromium-free passivation.

### SUMMARY

The present disclosure provides a method for chromium-free passivation of lithium-ion battery copper foil, including the following steps:
step 1: peeling a lithium-ion battery copper foil from a cathode roller, and transferring the copper foil through a transition roller into a passivation tank;
step 2: adding a chromium-free passivator to the passivation tank;
step 3: immersing the copper foil in the passivator within the passivation tank while applying a cathodic passivation current;
step 4: conveying the copper foil through a liquid-squeezing roller for even distribution of the passivator over a surface of the copper foil, and drying the copper foil by passing it through an air-drying device;
step 5: drying the copper foil in an oven, then winding it onto a take-up roller to form a finished lithium-ion battery copper foil; followed by inspecting and testing the finished foil and storing qualified products.

In some embodiments, the chromium-free passivator used in the method is an organic-inorganic composite passivator, wherein the composite passivator includes both organic and inorganic components. Specifically, the passivator includes four functional agents: a film-forming agent, a film-forming auxiliary agent, a chelating agent, and a wetting agent. During the passivation process, a dense passivation film can be formed on the copper foil surface, thereby improving the oxidation resistance of the copper foil.

The film-forming agent is benzotriazole or tolyltriazole at a concentration of 3-10 g/L, which can form coordinate covalent bonds with copper atoms to generate a protective film on the surface of the copper foil, preventing the copper foil from oxidation by oxygen in the air. The film-forming agent in the passivator further includes one or more of molybdates, tungstates, and silicates, with a concentration of 1-5 g/L.

The film-forming auxiliary agent in the passivator is an inorganic phosphate with a concentration of 1-3 g/L.

The chelating agent is an organic acid selected from benzoic acid, oxalic acid, tannic acid, tartaric acid, and citric acid, with a concentration of 5-10 mL/L.

The wetting agent is one or more of sodium dodecyl sulfonate and cetyltrimethylammonium bromide, at a concentration of 0.5-1 g/L, to ensure full contact between the passivator and the copper foil.

In some embodiments, an aqueous passivation solution is prepared by adding the composite passivator into purified water, followed by adding a sodium hydroxide solution to adjust the pH of the passivation solution to a range of 3 to 5, wherein the composite passivator includes the film-forming agent, film-forming auxiliary agent, chelating agent, and wetting agent.

In some embodiments, two or more submerged rollers are installed in the passivation tank to ensure that the copper foil is fully immersed in the passivator solution.

In some embodiments, in the passivation tank, two anode plates are installed adjacent to a smooth side and a matte side of the lithium-ion battery copper foil, respectively, enabling a firm passivation film to form on both the smooth and matte sides under the passivation current.

In some embodiments, the passivation current applied to the anode plate facing the smooth side of the lithium-ion battery copper foil is in a range of 3-8 A, and the passivation current applied to the anode plate facing the matte side of the lithium-ion battery copper foil is in a range of 5-10 A.

In some embodiments, the liquid-squeezing roller is provided at the outlet of the passivation tank to remove residual passivator from the surface of the copper foil.

In some embodiments, the air-drying device is an air knife installed at the rear end of the passivation tank, which can dry the smooth and matte sides of the copper foil.

In some embodiments, the oven includes multiple heating resistance wires and is installed upstream of the take-up roller. Combined with the air knife and electric heating, the surface of the copper foil is thoroughly dried, thus preventing discoloration, adhesion, and odor caused by insufficient surface drying.

In some embodiments, a temperature of the oven is in a range of 100-150°C to accelerate the drying of the surface of the copper foil.

In some embodiments, the inspecting and testing include appearance inspection of the passivation film on the copper foil, surface wettability testing of the copper foil, oxidation resistance testing of the copper foil under constant temperature and humidity, and corrosion resistance testing of the copper foil in a salt spray environment.

For the appearance inspection of the passivation film on the copper foil, the chromium-free passivated copper foil is placed in a forced-air drying oven at a temperature of 60-100°C for 20-30 hours. After baking, the qualified copper foil is required with a surface without discoloration, adhesiveness, and no abnormal odor from the passivation film.

For the surface wettability test, an optical contact angle tester is used to deposit a water droplet onto the passivation film of the chromium-free passivated copper foil. A measured contact angle in the range of 40-60 degrees is deemed qualified.

For the oxidation resistance test under constant temperature and humidity, A4-sized copper foil samples passivated with the chromium-free passivator are placed in a constant temperature and humidity test chamber at a temperature of 40-60°C and a relative humidity of 90-95% for 24 hours. The qualified copper foil shall have a surface free of oxidation spots and corrosion spots.

For the corrosion resistance test in a salt spray environment, roll-shaped samples of the chromium-free passivated copper foil are placed in a salt spray test chamber, and a sodium chloride solution is sprayed onto the surface of the copper foil using an atomizer sprayer. The concentration of the sodium chloride solution is in a range of 5-10%, the test temperature is in a range of 30-50°C, and the test duration is 72 hours. After completion, the copper foil roll is removed and observed. The qualified copper foil shall have a surface free of discoloration, oxidation spots, and corrosion spots.

Compared with the prior art, the beneficial effects of the present disclosure are as follows. Nitrogen-containing heterocyclic compounds, for example, benzotriazole and tolyltriazole, are added to a molybdate-silicate composite as the film-forming agent for initial film formation on the copper foil. Phosphate is then added as a film-forming auxiliary agent, which improves the density and rigidity of the passivation film, thereby realizing the durability and stability of the lithium-ion battery copper foil during long-term storage. The present disclosure effectively addresses several shortcomings of existing methods, including local discoloration after baking, surface adhesiveness, and unpleasant odor in the passivated copper foil roll. Compared with conventional techniques, the present disclosure further resolves environmental pollution caused by chromium-containing passivators and eliminates the presence of chromium on the surface of the copper foil.

After passivation with the chromium-free passivator of the present disclosure, the copper foil exhibits no discoloration after baking in a constant-temperature oven at 180°C for 15 minutes. Additionally, after 72 hours of exposure to 5% salt spray (in accordance with Chinese standard methods), the copper foil maintains a normal surface with good wettability and conductivity. The passivated copper foil is applicable in the lithium-ion battery field. The chromium-free passivator for lithium-ion battery copper foil of the present disclosure contains no toxic substances such as chromium or arsenic. The passivation process in the present disclosure is simple, features environmentally friendly by-products, and relatively low passivation cost, thereby being conducive to sustainable development.

### BRIEF DESCRIPTION OF THE DRAWINGS

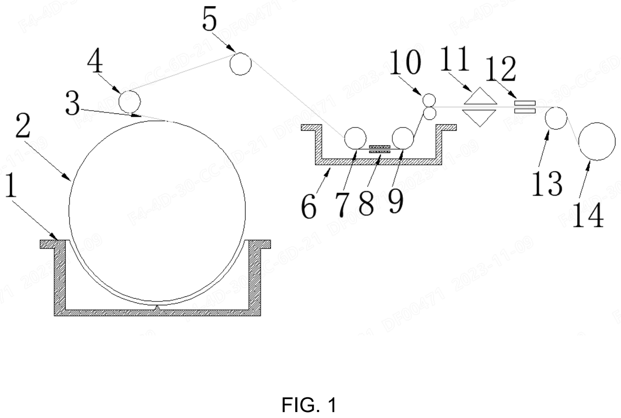

FIG. 1 is a schematic diagram of a chromium-free passivation process for lithium-ion battery copper foil.

### Reference Numerals

- 1: Anode Tank
- 2: Cathode Roller
- 3: Lithium-Ion Battery Copper Foil
- 4: Peeling Roller
- 5: Transition Roller
- 6: Passivation Tank
- 7: Front Passivation Roller
- 8: Anode Plate
- 9: Rear Passivation Roller
- 10: Liquid-squeezing Roller
- 11: Air Knife
- 12: Guide Roller
- 13: Post Tension Roller
- 14: Take-Up Roller

### DETAILED DESCRIPTION

To clarify the technical solutions and advantages of the present disclosure, the disclosure is further described in detail below with reference to specific embodiments. It should be understood that the specific embodiments described herein are only intended to explain the present disclosure and are not intended to limit the scope of the present disclosure.

The present disclosure provides a method for chromium-free passivation of lithium-ion battery copper foil, a chromium-free passivator, and a passivation solution.

A first embodiment of the present disclosure provides a chromium-free passivator, including a film-forming agent, a film-forming auxiliary agent, a chelating agent, and a wetting agent. The film-forming agent includes a first film-forming agent and a second film-forming agent. The first film-forming agent includes one or more of benzotriazole and its derivatives. The second film-forming agent includes one or more of molybdates, tungstates, and silicates.

The first film-forming agent forms coordinate covalent bonds with copper atoms to generate a protective film on the surface of the copper foil, preventing the copper foil from oxidation by oxygen in the air. The second film-forming agent assists in forming corresponding oxides, which fill the voids created by the coordination of benzotriazole with copper, making the film denser. Therefore, the passivator of the present disclosure is not only environmentally friendly but also provides a strong corrosion-resistant and durable passivation film on the surface of the copper foil.

In some embodiments, the first film-forming agent includes benzotriazole and/or tolyltriazole, preferably in an amount of 3-10 parts by weight. The second film-forming agent is preferably in an amount of 1-5 parts by weight.

In some embodiments, the chromium-free passivator includes one or more of the following: the film-forming auxiliary agent includes an inorganic phosphate, preferably in an amount of 1-3 parts by weight; the chelating agent includes an organic acid, the organic acid is preferably selected from one or more of benzoic acid, oxalic acid, tannic acid, tartaric acid, and citric acid, and the chelating agent is preferably in an amount of 5-10 parts by weight, more preferably 5-7 parts by weight; the wetting agent includes one or more of sodium dodecyl sulfonate and cetyltrimethylammonium bromide, preferably in an amount of 0.5-1 part by weight.

The wetting agent enables uniform dispersion of various reagents in the solvent, thereby forming a uniform passivation film on the foil surface. The active groups in the chelating agent can bind with copper to form a firm adsorption layer, enhancing oxidation resistance. The film-forming auxiliary agent can form corresponding oxides and fill the voids generated by the coordination of benzotriazole with copper, making the passivation film denser.

A second embodiment of the present disclosure provides a passivation solution, including a passivator, a solvent, and a pH adjusting agent. The passivator is any one of the chromium-free passivators described in the first embodiment. Preferably, the pH of the passivation solution is in a range of 3-5.

Through the coordination of the first film-forming agent in the passivator with copper atoms, a protective film is formed on the surface of the copper foil, preventing the copper foil from oxidation by oxygen in the atmosphere. The second film-forming agent assists in forming corresponding oxides, which fill the voids generated by the coordination of benzotriazole with copper, making the passivation film denser. Therefore, the passivation solution of the present disclosure is environmentally friendly, the resulting passivation film exhibits strong corrosion resistance and high durability.

In some embodiments, the pH of the passivation solution is controlled by adding a sodium hydroxide solution.

In some embodiments, to enhance the function of each component and the synergistic effect between the components, the concentration of the first film-forming agent in the passivation solution is preferably in a range of 3-10 g/L, more preferably 5-6 g/L; the concentration of the second film-forming agent is in a range of 1-5 g/L (it should be noted that when there are two or more second film-forming agents, the above 1-5 g/L refers to the concentration of each second film-forming agent); the concentration of the film-forming auxiliary agent is in a range of 1-3 g/L; the concentration of the chelating agent is in a range of 5-10 mL/L, preferably 5-7 mL/L; and the concentration of the wetting agent is in a range of 0.5-1 g/L.

A third embodiment of the present disclosure provides a method for chromium-free passivation of copper foil, including:
(1) immersing a copper foil in a passivation solution for surface electrodeposition passivation treatment to obtain a copper foil having a passivation film on its surface, wherein the passivation solution is any one of the passivation solutions described in the second embodiment; and
(2) removing a residual passivation solution from the copper foil having the passivation film on its surface.

The method of the present disclosure is environmentally friendly, and the resulting passivation film exhibits strong corrosion resistance and high durability.

In some embodiments, the process of surface electrodeposition passivation treatment of the copper foil in the passivation solution includes: immersing the copper foil in the passivation solution, wherein the copper foil serves as a cathode; arranging an anode plate adjacent to the smooth side and the matte side of the copper foil, respectively; applying a passivation current to form passivation films on both the smooth and matte sides of the copper foil; preferably, a passivation current of 3-8 A is applied to form the passivation film on the smooth side of the copper foil; and a passivation current of 5-10 A is applied to form the passivation film on the matte side of the copper foil.

Since the smooth side of the copper foil is influenced by the surface morphology of the cathode roller and has relatively lower roughness, whereas the matte side, formed by crystalline growth, has higher roughness, different passivation currents are applied to improve the uniformity of the passivation films on the smooth and matte sides.

In some embodiments, to better prevent oxidation of the copper foil, the copper foil production process and the passivation process are carried out in sequence, using the copper foil peeled from the cathode roller in the electrolytic copper foil production process.

In some embodiments, the copper foil peeled from the cathode roller of the electrolytic copper foil production process is conveyed through a transition roller into the passivation tank. Preferably, two or more submerged rollers are installed in the passivation tank to ensure that the copper foil is fully immersed in the passivation solution. Preferably, a liquid-squeezing roller is provided at the outlet of the passivation tank to remove residual passivation solution from the surface of the copper foil. Then the copper foil is dried after passing through an air-drying device. Preferably, the air-drying device is an air knife installed at the rear end of the passivation tank, to dry both the smooth and matte sides of the copper foil.

Preferably, after air drying, the copper foil is further dried in an oven. Preferably, the oven includes multiple heating resistance wires and is installed upstream of the take-up roller for the copper foil winding. Combined with the air knife and electric heating, the surface of the copper foil is thoroughly dried, thus preventing discoloration, adhesion, and odor caused by insufficient surface drying.

In some embodiments, the temperature of the oven is preferably in a range of 100-150°C, which accelerates the drying of the surface of the copper foil.

The beneficial effects of the present disclosure will be further explained below in conjunction with embodiments and comparative examples.

### Example 1

A 200 L passivator was prepared, containing benzotriazole at 3 g/L, sodium molybdate at 1 g/L, sodium silicate at 1 g/L, sodium phosphate at 1 g/L, and citric acid at 5 mL/L. Then, the passivator was stirred for 10 minutes, after complete dissolution, was introduced into the passivation tank.

A lithium-ion battery copper foil with a thickness of 6 µm was produced at a line speed of 10 m/min. The copper foil was peeled from the cathode roller and transferred into the passivation tank. A passivation current of 5 A was applied to the smooth side of the copper foil, and a passivation current of 8 A was applied to the matte side of the copper foil. Subsequently, the copper foil was removed from the passivation tank and passed through a liquid-squeezing roller to ensure the passivation solution on its surface was evenly distributed. The copper foil was then blown dry with an air knife to remove surface liquid and further dried in an oven at 120°C. Finally, the copper foil was wound onto a take-up roller to form a semifinished lithium-ion battery copper foil roll.

A 500-meter length of copper foil produced according to this example was baked in an oven at 80°C for 24 hours, and then tested. In the first step, the copper foil was observed after the 24-hour baking at 80°C, and discoloration of the foil surface, surface adhesiveness, and whether the passivation film exhibited any abnormal odor were evaluated. In the second step, A4-sized samples of the copper foil were baked at 140°C for 15 minutes, and the surface discoloration of the copper foil was observed. In the third step, the surface contact angle of the passivated copper foil was measured. In the fourth step, A4-sized copper foil samples were placed in a constant temperature and humidity chamber at a temperature of 60°C and a relative humidity of 95% for 24 hours, and the surface of the copper foil was examined for oxidation spots and corrosion spots. In the fifth step, roll-shaped samples of the copper foil were placed in a test chamber, and a 10% sodium chloride solution was sprayed onto the surface of the copper foil using an atomizer sprayer. The test was conducted at 40°C for 72 hours. The surface of the copper foil was observed for oxidation and corrosion spots.

### Example 2

A 200 L passivator was prepared, containing benzotriazole at 10 g/L, sodium molybdate at 5 g/L, sodium silicate at 2 g/L, sodium phosphate at 3 g/L, citric acid at 10 mL/L, and sodium dodecyl sulfonate at 1 g/L. Then, the passivator was stirred for 10 minutes, after complete dissolution, was introduced into the passivation tank.

A lithium-ion battery copper foil with a thickness of 6 µm was produced at a line speed of 10 m/min. The copper foil was peeled from the cathode roller and transferred into the passivation tank. A passivation current of 5 A was applied to the smooth side of the copper foil, and a passivation current of 8 A was applied to the matte side of the copper foil. Subsequently, the copper foil was removed from the passivation tank and passed through a liquid-squeezing roller to ensure the passivation solution on its surface was evenly distributed. The copper foil was then blown dry with an air knife to remove surface liquid and further dried in an oven at 120°C. Finally, the copper foil was wound onto a take-up roller to form a semifinished lithium-ion battery copper foil roll.

A 500-meter length of copper foil produced according to this example was baked in an oven at 80°C for 24 hours, and then tested. In the first step, the copper foil was observed after the 24-hour baking at 80°C, and discoloration of the foil surface, surface adhesiveness, and whether the passivation film exhibited any abnormal odor were evaluated. In the second step, A4-sized samples of the copper foil were baked at 140°C for 15 minutes, and the surface discoloration of the copper foil was observed. In the third step, the surface contact angle of the passivated copper foil was measured. In the fourth step, A4-sized copper foil samples were placed in a constant temperature and humidity chamber at the temperature of 60°C and the relative humidity of 95% for 24 hours, and the surface of the copper foil was examined for oxidation spots and corrosion spots. In the fifth step, roll-shaped samples of the copper foil were placed in a test chamber, and a 10% sodium chloride solution was sprayed onto the surface of the copper foil using an atomizer sprayer. The test was conducted at 40°C for 72 hours. The surface of the copper foil was observed for oxidation and corrosion spots.

### Example 3

A 200 L passivator was prepared, containing benzotriazole at 5 g/L, sodium molybdate at 5 g/L, sodium silicate at 2 g/L, sodium phosphate at 2 g/L, citric acid at 5 mL/L, and sodium dodecyl sulfonate at 1 g/L. Then, the passivator was stirred for 10 minutes, after complete dissolution, was introduced into the passivation tank. Sodium hydroxide solution was added to the passivation tank to adjust the pH of the passivation solution to 3.5.

A lithium-ion battery copper foil with a thickness of 6 µm was produced at a line speed of 10 m/min. The copper foil was peeled from the cathode roller and transferred into the passivation tank. A passivation current of 5 A was applied to the smooth side of the copper foil, and a passivation current of 8 A was applied to the matte side of the copper foil. Subsequently, the copper foil was removed from the passivation tank and passed through a liquid-squeezing roller to ensure the passivation solution on its surface was evenly distributed. The copper foil was then blown dry with an air knife to remove surface liquid and further dried in an oven at 120°C. Finally, the copper foil was wound onto a take-up roller to form a semifinished lithium-ion battery copper foil roll.

A 500-meter length of copper foil produced according to this example was baked in an oven at 80°C for 24 hours and then for testing. In the first step, the copper foil was observed after the 24-hour baking at 80°C, and discoloration of the foil surface, surface adhesiveness, and whether the passivation film exhibited any abnormal odor were evaluated. In the second step, A4-sized samples of the copper foil were baked at 140°C for 15 minutes, and the surface discoloration of the copper foil was observed. In the third step, the surface contact angle of the passivated copper foil was measured. In the fourth step, A4-sized copper foil samples were placed in a constant temperature and humidity chamber at the temperature of 60°C and the relative humidity of 95% for 24 hours, and the surface of the copper foil was examined for oxidation spots and corrosion spots. In the fifth step, roll-shaped samples of the copper foil were placed in a test chamber, and a 10% sodium chloride solution was sprayed onto the surface of the copper foil using an atomizer sprayer. The test was conducted at 40°C for 72 hours. The surface of the copper foil was observed for oxidation and corrosion spots.

### Example 4

A 200 L passivator was prepared, containing benzotriazole at 6 g/L, sodium molybdate at 3 g/L, sodium silicate at 2 g/L, sodium phosphate at 1 g/L, citric acid at 7 mL/L, and sodium dodecyl sulfonate at 1 g/L. Then, the passivator was stirred for 10 minutes, after complete dissolution, was introduced into the passivation tank. Sodium hydroxide solution was added to the passivation tank to adjust the pH of the passivation solution to 3.5.

A lithium-ion battery copper foil with a thickness of 6 µm was produced at a line speed of 10 m/min. The copper foil was peeled from the cathode roller and transferred into the passivation tank. A passivation current of 5 A was applied to the smooth side of the copper foil, and a passivation current of 8 A was applied to the matte side of the copper foil. Subsequently, the copper foil was removed from the passivation tank and passed through a liquid-squeezing roller to ensure the passivation solution on its surface was evenly distributed. The copper foil was then blown dry with an air knife to remove surface liquid and further dried in an oven at 120°C. Finally, the copper foil was wound onto a take-up roller to form a semifinished lithium-ion battery copper foil roll.

A 500-meter length of copper foil produced according to this example was baked in an oven at 80°C for 24 hours and then for testing. In the first step, the copper foil was observed after the 24-hour baking at 80°C, and discoloration of the foil surface, surface adhesiveness, and whether the passivation film exhibited any abnormal odor were evaluated. In the second step, A4-sized samples of the copper foil were baked at 140°C for 15 minutes, and the surface discoloration of the copper foil was observed. In the third step, the surface contact angle of the passivated copper foil was measured. In the fourth step, A4-sized copper foil samples were placed in a constant temperature and humidity chamber at the temperature of 60°C and the relative humidity of 95% for 24 hours, and the surface of the copper foil was examined for oxidation spots and corrosion spots. In the fifth step, roll-shaped samples of the copper foil were placed in a test chamber, and a 10% sodium chloride solution was sprayed onto the surface of the copper foil using an atomizer sprayer. The test was conducted at 40°C for 72 hours. The surface of the copper foil was observed for oxidation and corrosion spots.

### Example 5

A 200 L passivator was prepared, containing benzotriazole at 6 g/L, sodium molybdate at 4 g/L, sodium silicate at 2 g/L, sodium phosphate at 1 g/L, citric acid at 6.5 mL/L, and sodium dodecyl sulfonate at 2 g/L. Then, the passivator was stirred for 10 minutes, after complete dissolution, was introduced into the passivation tank. Sodium hydroxide solution was added to the passivation tank to adjust the pH of the passivation solution to 3.5.

A lithium-ion battery copper foil with a thickness of 6 µm was produced at a line speed of 10 m/min. The copper foil was peeled from the cathode roller and transferred into the passivation tank. A passivation current of 5 A was applied to the smooth side of the copper foil, and a passivation current of 8 A was applied to the matte side of the copper foil. Subsequently, the copper foil was removed from the passivation tank and passed through a liquid-squeezing roller to ensure the passivation solution on its surface was evenly distributed. The copper foil was then blown dry with an air knife to remove surface liquid and further dried in an oven at 120°C. Finally, the copper foil was wound onto a take-up roller to form a semifinished lithium-ion battery copper foil roll.

A 500-meter length of copper foil produced according to this example was baked in an oven at 80°C for 24 hours and then for testing. In the first step, the copper foil was observed after the 24-hour baking at 80°C, and discoloration of the foil surface, surface adhesiveness, and whether the passivation film exhibited any abnormal odor were evaluated. In the second step, A4-sized samples of the copper foil were baked at 140°C for 15 minutes, and the surface discoloration of the copper foil was observed. In the third step, the surface contact angle of the passivated copper foil was measured. In the fourth step, A4-sized copper foil samples were placed in a constant temperature and humidity chamber at the temperature of 60°C and the relative humidity of 95% for 24 hours, and the surface of the copper foil was examined for oxidation spots and corrosion spots. In the fifth step, roll-shaped samples of the copper foil were placed in a test chamber, and a 10% sodium chloride solution was sprayed onto the surface of the copper foil using an atomizer sprayer. The test was conducted at 40°C for 72 hours. The surface of the copper foil was observed for oxidation and corrosion spots.

### Comparative Example 1

A 200 L passivator was prepared, containing benzotriazole at 3 g/L, sodium molybdate at 1 g/L, sodium silicate at 1 g/L, and sodium phosphate at 1 g/L. Then, the passivator was stirred for 10 minutes, after complete dissolution, was introduced into the passivation tank.

A lithium-ion battery copper foil with a thickness of 6 µm was produced at a line speed of 10 m/min. The copper foil was peeled from the cathode roller and transferred into the passivation tank. Subsequently, the copper foil was removed from the passivation tank and passed through a liquid-squeezing roller to ensure the passivation solution on its surface was evenly distributed. The copper foil was then blown dry with an air knife to remove surface liquid and further dried in an oven at 120°C. Finally, the copper foil was wound onto a take-up roller to form a semifinished lithium-ion battery copper foil roll.

A 500-meter length of copper foil produced according to this example was baked in an oven at 80°C for 24 hours and then d for testing. In the first step, the copper foil was observed after the 24-hour baking at 80°C, and discoloration of the foil surface, surface adhesiveness, and whether the passivation film exhibited any abnormal odor were evaluated. In the second step, A4-sized samples of the copper foil were baked at 140°C for 15 minutes, and the surface discoloration of the copper foil was observed. In the third step, the surface contact angle of the passivated copper foil was measured. In the fourth step, A4-sized copper foil samples were placed in a constant temperature and humidity chamber at the temperature o 60°C and the relative humidity of 95% for 24 hours, and the surface of the copper foil was examined for oxidation spots and corrosion spots. In the fifth step, roll-shaped samples of the copper foil were placed in a test chamber, and a 10% sodium chloride solution was sprayed onto the surface of the copper foil using an atomizer sprayer. The test was conducted at 40°C for 72 hours. The surface of the copper foil was observed for oxidation and corrosion spots.

### Comparative Example 2

A 200 L passivator was prepared, containing benzotriazole at 3 g/L, sodium molybdate at 1 g/L, sodium silicate at 1 g/L, sodium phosphate at 1 g/L, and citric acid at 2.5 mL/L. Then, the passivator was stirred for 10 minutes to achieve uniformity and was introduced into the passivation tank.

A lithium-ion battery copper foil with a thickness of 6 µm was produced at a line speed of 10 m/min. The copper foil was peeled from the cathode roller and transferred into the passivation tank. A passivation current of 5 A was applied to the smooth side of the copper foil, and a passivation current of 8 A was applied to the matte side of the copper foil. Subsequently, the copper foil was removed from the passivation tank and passed through a liquid-squeezing roller to ensure the passivation solution on its surface was evenly distributed. The copper foil was then blown dry with an air knife to remove surface liquid and further dried in an oven at 120°C. Finally, the copper foil was wound onto a take-up roller to form a semifinished lithium-ion battery copper foil roll.

A 500-meter length of copper foil produced according to this example was baked in an oven at 80°C for 24 hours and then for testing. In the first step, the copper foil was observed after the 24-hour baking at 80°C, and discoloration of the foil surface, surface adhesiveness, and whether the passivation film exhibited any abnormal odor were evaluated. In the second step, A4-sized samples of the copper foil were baked at 140°C for 15 minutes, and the surface discoloration of the copper foil was observed. In the third step, the surface contact angle of the passivated copper foil was measured. In the fourth step, A4-sized copper foil samples were placed in a constant temperature and humidity chamber at the temperature of 60°C and the relative humidity of 95% for 24 hours, and the surface of the copper foil was examined for oxidation spots and corrosion spots. In the fifth step, roll-shaped samples of the copper foil were placed in a test chamber, and a 10% sodium chloride solution was sprayed onto the surface of the copper foil using an atomizer sprayer. The test was conducted at 40°C for 72 hours. The surface of the copper foil was observed for oxidation and corrosion spots.

**Table 1: Summary of Experimental Results**

| Item | Surface Condition After Baking at 80°C for 24 Hours | Surface Condition After Baking at 140°C for 15 Minutes | Surface Contact Angle | Constant Temperature & Humidity Test (60°C/95% RH/24 Hours) | Salt Spray Test (10% NaCl, 40°C for 72 Hours) | Surface Adhesive ness | Odor |
|---|---|---|---|---|---|---|---|
| Example 1 | Slight discoloration | Discoloration | 46° | Many discoloration spots | Many oxidation spots | Normal | No odor |
| Example 2 | Local discoloration | Discoloration | 27° | Many discoloration spots | Many oxidation spots | Adhesive | Odor present |
| Example 3 | Normal | Slight discoloration | 40° | Few discoloration spots | Few oxidation spots | Adhesive | Odor present |
| Example 4 | Normal | Normal | 32° | Normal | Normal | Adhesive | Odor present |
| Example 5 | Normal | Normal | 65° | Normal | Normal | Normal | No odor |
| Comparative Example 1 | Full-surface discoloration | Discoloration | 28° | Many discoloration spots | Many oxidation spots | Adhesive | No odor |
| Comparative Example 2 | Local discoloration | Discoloration | 39° | Few discoloration spots | Many oxidation spots | Adhesive | No odor |

The experimental results demonstrated that, by using the chromium-free passivator of the present disclosure, a chromium-free passivation film was formed on the surface of the lithium-ion battery copper foil, thereby imparting antioxidant properties to the copper foil. Furthermore, the effectiveness of the chromium-free passivation film was verified by the corresponding detection methods.

The above description represents only the preferred embodiments of the present disclosure, and the scope of the present disclosure is not limited thereto. Any person skilled in the art, within the technical scope disclosed herein, may make equivalent modifications or substitutions based on the technical solutions and inventive concepts of the present disclosure, and such modifications and substitutions should be considered within the protection scope of the present disclosure.

## Claims

1. A method for chromium-free passivation of lithium-ion battery copper foil, comprising the following steps:
step 1: peeling a lithium-ion battery copper foil from a cathode roller, and transferring the copper foil through a transition roller into a passivation tank;
step 2: adding a chromium-free passivator to the passivation tank;
step 3: immersing the copper foil in the passivator within the passivation tank while applying a cathodic passivation current;
step 4: conveying the copper foil through a liquid-squeezing roller for even distribution of the passivator over a surface of the copper foil, and drying the copper foil by passing it through an air-drying device; and
step 5: drying the copper foil in an oven, then winding it onto a take-up roller to form a finished lithium-ion battery copper foil; followed by inspecting and testing the finished copper foil and storing qualified products.

2. The method of claim 1, wherein the chromium-free passivator is an organic-inorganic composite passivator; wherein the chromium-free passivator comprises a film-forming agent, a film-forming auxiliary agent, a chelating agent, and a wetting agent; wherein the method for chromium-free passivation of lithium-ion battery copper foil enables formation of a dense passivation film on the copper foil to improve the oxidation resistance of the copper foil;
wherein the film-forming agent is benzotriazole or tolyltriazole with a concentration of 3-10 g/L, which can form coordinate covalent bonds with copper atoms to form a protective film on the surface of the copper foil, preventing the copper foil from being oxidized by oxygen in the air; the film-forming agent further includes one or more of molybdates, tungstates, and silicates, with a concentration of 1-5 g/L;
the film-forming auxiliary agent is an inorganic phosphate, with a concentration of 1-3 g/L;
the chelating agent is an organic acid selected from benzoic acid, oxalic acid, tannic acid, tartaric acid, and citric acid, with a concentration of 5-10 mL/L; and
the wetting agent is one or more of sodium dodecyl sulfonate and cetyltrimethylammonium bromide, at a concentration of 0.5-1 g/L, wherein the wetting agent ensures full contact between the passivator and the copper foil.

3. The method of claim 2, wherein an aqueous passivation solution is prepared by adding the passivator into purified water, followed by adding a sodium hydroxide solution to adjust the pH of the aqueous passivation solution to a range of 3 to 5.

4. The method of claim 2, wherein two or more submerged rollers are installed in the passivation tank to ensure that the copper foil is fully immersed in the passivator.

5. The method of claim 2, wherein in the passivation tank, two anode plates are installed adjacent to a smooth side and a matte side of the lithium-ion battery copper foil, respectively, enabling a firm passivation film to form on both the smooth and matte sides in the passivator under a passivation current.

6. The method of claim 2, wherein a passivation current applied to an anode plate facing a smooth side of the lithium-ion battery copper foil is in a range of 3-8 A, and the passivation current applied to an anode plate facing a matte side of the lithium-ion battery copper foil is in a range of 5-10 A.

7. The method of claim 2, wherein a liquid-squeezing roller is arranged at an outlet of the passivation tank to remove residual passivator from the surface of the copper foil.

8. The method of claim 2, wherein the air-drying device is an air knife installed at a rear end of the passivation tank, and is configured to dry both a smooth side and a matte side of the copper foil.

9. The method of claim 2, wherein the oven comprises a plurality of heating resistance wires and is installed upstream of the take-up roller; wherein combined with an air knife and electric heating, the surface of the copper foil is thoroughly dried, thus preventing discoloration, adhesion, and odor caused by insufficient surface drying; wherein a baking temperature of the oven is in a range of 100-150°C to accelerate the drying of the surface of the copper foil.

10. The method of claim 1, wherein in step 5, the inspecting and testing comprises appearance inspection of a passivation film on the copper foil, surface wettability testing of the copper foil, oxidation resistance testing of the copper foil under constant temperature and humidity, and corrosion resistance testing of the copper foil in a salt spray environment;
wherein the appearance inspection of the passivation film on the copper foil comprises placing the copper foil in a forced-air drying oven at a temperature of 60-100°C for 20-30 hours; wherein after baking, requiring that the surface of the copper foil roll exhibits no discoloration, adhesiveness, and no abnormal odor from the passivation film;
wherein the surface wettability test comprises using an optical contact angle tester to deposit a water droplet onto the passivation film of the copper foil; wherein a measured contact angle of the copper foil is required in a range of 40-60 degrees;
wherein the oxidation resistance test under constant temperature and humidity comprises placing an A4-sized copper foil sample in a constant temperature and humidity test chamber at a temperature of 40-60°C and a relative humidity of 90-95% for 24 hours; and requiring that the surface of the copper foil is free of oxidation spots and corrosion spots; and
wherein the corrosion resistance test in a salt spray environment comprises placing a roll-shaped sample of the copper foil in a salt spray test chamber, and using an atomizer sprayer to spray a sodium chloride solution onto the surface of the copper foil; wherein a concentration of the sodium chloride solution is in a range of 5-10%, a test temperature is in a range of 30-50°C, and a test duration is 72 hours; then after removing the copper foil from the salt spray test chamber, requiring that the surface of the copper foil is free of discoloration, oxidation spots, and corrosion spots.

11. A chromium-free passivator, comprising a film-forming agent, a film-forming auxiliary agent, a chelating agent, and a wetting agent; wherein the film-forming agent comprises a first film-forming agent and a second film-forming agent; the first film-forming agent comprises one or more of benzotriazole and its derivatives; the second film-forming agent comprises one or more of molybdates, tungstates, and silicates.

12. The chromium-free passivator of claim 11, wherein the first film-forming agent comprises benzotriazole and/or tolyltriazole; preferably, the first film-forming agent is in an amount of 3-10 parts by weight; preferably, the second film-forming agent is in an amount of 1-5 parts by weight.

13. The chromium-free passivator of claim 11 or 12, wherein the chromium-free passivator comprises one or more of the following:
the film-forming auxiliary agent comprises an inorganic phosphate; preferably, the inorganic phosphate is in an amount of 1-3 parts by weight;
the chelating agent comprises an organic acid; preferably, the organic acid comprises one or more of benzoic acid, oxalic acid, tannic acid, tartaric acid, and citric acid; preferably, the chelating agent is in an amount of 5-10 parts by weight, more preferably, 5-7 parts by weight; and
the wetting agent comprises sodium dodecyl sulfonate and/or cetyltrimethylammonium bromide; preferably, the wetting agent is in an amount of 0.5-1 part by weight.

14. A passivation solution, comprising the chromium-free passivator according to any one of claims 11 to 13, a solvent, and an acid-base regulator; preferably, the pH value of the passivation solution is in a range of 3-5.

15. The passivation solution of claim 14, wherein in the passivation solution:
a concentration of the first film-forming agent is a range of 3-10 g/L, preferably 5-6 g/L;
a concentration of the second film-forming agent is in a range of 1-5 g/L;
a concentration of the film-forming auxiliary agent is in a range of 1-3 g/L;
a concentration of the chelating agent is in a range of 5-10 mL/L, preferably 5-7 mL/L; and
a concentration of the wetting agent is in a range of 0.5-1 g/L.

16. A method for chromium-free passivation of copper foil, comprising:
immersing a copper foil in the passivation solution according to claim 14 or 15 for surface electrodeposition passivation treatment to obtain a copper foil with a passivation film on its surface; and
removing residual passivation solution from the copper foil with the passivation film on its surface.

17. The method of claim 16, wherein the process of the surface electrodeposition passivation treatment comprises:
immersing the copper foil in the passivation solution, wherein the copper foil serves as a cathode;
arranging an anode plate adjacent to a smooth side and a matte side of the copper foil, respectively; and
applying a passivation current to form a passivation film on the smooth side and the matte side of the copper foil, respectively; preferably, a passivation current of 3-8 A is applied to form the passivation film on the smooth side of the copper foil; and preferably a passivation current of 5-10 A is applied to form the passivation film on the matte side of the copper foil.

18. The method of claim 17, wherein the copper foil is peeled from a cathode roller in an electrolytic copper foil production process.
